(19) **Europäisches Patentamt**
**European Patent Office**
**Office européen des brevets**

(11) **EP 4 008 656 B1**

(12) **EUROPEAN PATENT SPECIFICATION**

(45) Date of publication and mention
of the grant of the patent:
**01.05.2024 Bulletin 2024/18**

(21) Application number: **21210719.7**

(22) Date of filing: **26.11.2021**

(51) International Patent Classification (IPC):
**B65G 27/20** *(2006.01)*    **B65G 27/32** *(2006.01)*
**B65G 27/26** *(2006.01)*    **B65G 43/00** *(2006.01)*

(52) Cooperative Patent Classification (CPC):
**B65G 43/00; B65G 27/20; B65G 27/26;**
**B65G 27/32**

(54) **VIBRATING CONVEYOR AND THE METHOD FOR CONTROLLING THE OPERATION OF THE VIBRATING CONVEYOR**

SCHWINGFÖRDERER UND VERFAHREN ZUM BETREIBEN EINES SCHWINGFÖRDERERS

TRANSPORTEUR VIBRANT ET PROCÉDÉ DE COMMANDE D'UN TRANSPORTEUR VIBRANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.12.2020 PL 43618520**

(43) Date of publication of application:
**08.06.2022 Bulletin 2022/23**

(73) Proprietor: **Akademia Gorniczo-Hutnicza im. Stanislawa Staszica w Krakowie 30-059 Krakow (PL)**

(72) Inventors:
• **Surówka, Witold**
  **Górna Wies (PL)**
• **Czubak, Piotr**
  **Kraków (PL)**
• **Bednarski, Lukasz**
  **Kielce (PL)**

(74) Representative: **Wlasienko, Jozef et al Polservice Kancelaria Rzeczników Patentowych Sp. z o.o. Ul. Bluszczanska 73 00-712 Warszawa (PL)**

(56) References cited:
**PL-A1- 425 950      US-A- 3 053 379**
**US-A- 4 017 060**

• **CZUBAK PIOTR ET AL: "Analysis of a New Vibratory Conveyor Allowing for a Sudden Stopping of the Transport", TEHNICKI VJESNIK, [Online] vol. 27, no. 2, 1 April 2020 (2020-04-01), pages 520-526, XP055909747, HR ISSN: 1330-3651, DOI: 10.17559/TV-20181206111514 Retrieved from the Internet: URL:https://hrcak.srce.hr/en/file/343921> [retrieved on 2022-04-06]**

## Description

The subject matter of the invention relates to a vibrating conveyor and a method for controlling the operation of the vibrating conveyor with variable performance, with the possibility of stopping transport, applicable to the transport of materials, especially in the mining and processing industry, in technological lines requiring frequent stopping and changing of operating parameters.

The American patent specification US3064357A discloses a conveyor having a control system which, by means of an arrangement of sensors, analyses the thickness of the feed layer and the transport speed. On this basis, the amount of material that has been transported is calculated and it is possible to switch off the conveyor at the right moment. After switching off the vibrating conveyor, the transport continues for some time due to machine vibrations during coastdown. A similar effect also occurs in the solutions known from American patent specifications US3053379A or US4771894A, in which a trough supported on a spring system is excited to vibrations by means of counter-rotating self-synchronizing vibrators. The resultant force originating from the vibrator system passes through the centre of mass of the trough system causing its rectilinear vibrations and is transferred to the feed, causing its transport.

The Polish patent specification PL425086B1 discloses a highly efficient dosing vibrating conveyor with the possibility of a smooth adjustment of performance during operation. The conveyor comprises a main suspension, a vibrating trough driven by self-synchronizing inertial vibrators with a smooth adjustment of rotational speed, the resultant force of which passes through the centre of gravity of the conveyor body. Moreover, the conveyor comprises at least one additional resonant vibration damping system connected to the vibrating trough, one end of the damping system being connected to the vibrating conveyor, and the other end thereof being fixed in an immovable manner. Stopping the speed carried out by slowing down the vibrations of the trough to low speeds at which the transport stops. When being stopped, the system passes through a resonant zone, but is equipped with special dampers which reduce undesired excitation in this zone. To some extent, it regulates the course of the trough braking and the transport speed of the feed. A characteristic is then obtained which allows the device to be used as a dispenser. Also, in Japanese patent specification JP6206962B2 stopping the transport of the feed on the conveyor is carried out by reducing the excitation frequency and, consequently, the amplitude of vibrations of the trough. The operating and stopping points of the conveyor in the above solution are determined at over resonance frequencies. This allows the system to gradually reduce the transport speed until it stops.

There are also known vibration conveyors in which dynamic elimination of excitation forces acting on the trough is used to suppress vibrations causing transport. For example, the Polish patent application PL425950, discloses a vibrating conveyor according to the pre-characterizing portion of claim 1.

The present invention provides for a steady-state operation of a conveyor in the resonance zone of the second resonance and solves a technical problem, that consists in the combination of features such as: the possibility of smoothly controlling the performance from 0-100% during operation, the possibility of immediately stopping the flow of feed from the conveyor without to switch off the drive and without the necessity for the system to pass through successive resonance zones, as well as the problem of too large amplitudes of an eliminator in the case of steady-state operation before the anti-resonance zone.

The essence of the invention is defined by a vibrating conveyor, according to claim 1. Dependent claims 2-4 concern particular embodiments of the invention as claimed in claim 1. Claim 5 defines a method for controlling the operation of the vibrating conveyor according to claim 1.

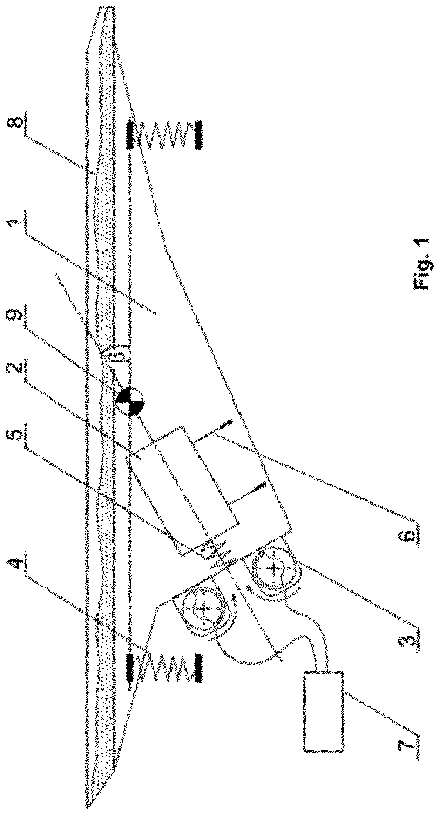

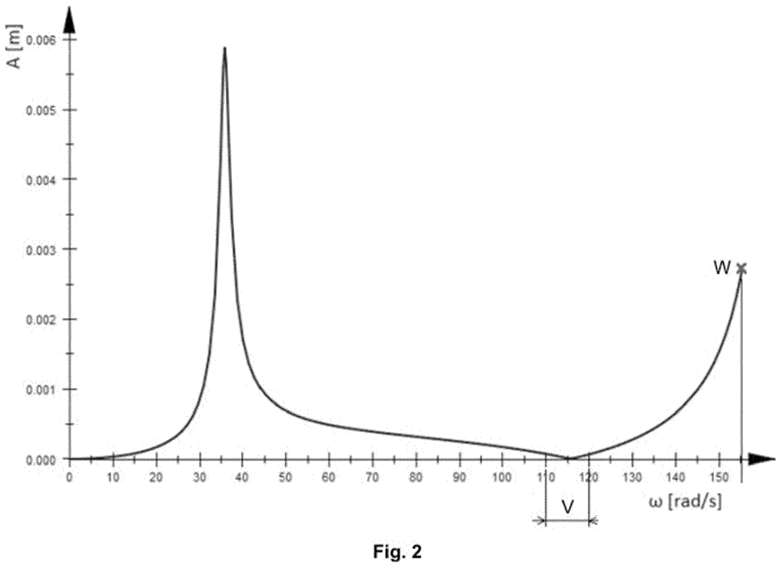

An exemplary embodiment of the invention is illustrated by means of a schematic drawing, where Fig. 1. shows a simplified drawing of the conveyor, whereas Fig. 2 shows amplitude characteristics of the operation of its trough with marked an anti-resonance valley and an operating point on the rising slope of the second resonance.

The vibrating conveyor (Fig. 1) comprises a trough 1 open on both sides, resiliently supported so that its working surface is in a horizontal position. The support of the trough 1 is provided by four identical coil springs 4 arranged in the corners of the trough 1 in such a way that the support places are located at equal distances from the centre of gravity 9 of the trough 1. To the trough 1, in the lower part of the body, which is an integral part thereof, is suspended a vibration drive in the form of a pair of self-synchronizing counter-rotating electro-vibrators 3 equipped with rotational speed regulators which are inverters 7. The direction of the line of action of the resultant excitation force of the electro-vibrators 3 passes through the centre of gravity 9 of the trough 1 lying on a vertical plane passing through the longitudinal axis of the trough 1 and the direction of the line of action of the resultant excitation force is inclined relative to the working surface of the trough 1 at an angle $(\beta) = 30°$. The axes of rotation of the electro-vibrators 3 are perpendicular to this plane. Inside the body integrated with the trough 1, there is the mass of the eliminator 2 such that its centre of gravity 9 lies in the direction of the line of action of the resultant force of the electro-vibrators 3. The mass of the eliminator 2 has degrees of freedom limited to one translational degree in the coincident direction with the direction of the line of action of the resultant force of the electro-vibrators 3 due to the fact that it is suspended inside the body of trough 1 by means of a resilient suspension which is provided by an additional coil spring 5 with the axis thereof coinciding with the direction of the line of action of the resultant force of the electro-vibrators 3, and two pairs of spring bars 6 with a longitudinal axis perpendicular to the direction of the line of action of the resultant force of the electro-vibrators 3, arranged in pairs, symmetrically on both sides of the mass of the eliminator 2.

The method for controlling the operation of the vibrating conveyor consists in that, after switching on the drive, the excitation frequency ($\omega$) is increased by means of inverters 7 so that the conveyor passes through the first resonance (Fig. 2) at $\omega$=35 rad/s (5.6 Hz) and through the anti-resonance valley (V) in the range $\omega$=110÷120 (17.5 Hz ÷ 19.1 Hz) in the vicinity of the dynamic elimination frequency, which takes place at $\omega=\omega_{el}$ =115 rad/s (18,3 Hz), reaching the operating point (W) with a fixed performance, situated on the rising slope of the second resonance. In the embodiment, the achieved operating point (W) on the amplitude characteristic of the conveyor A($\omega$), describing the dependence of the amplitude (A) of the trough 1 on the excitation frequency ($\omega$), has the co-ordinates $\omega$=157 rad/s (25 Hz) and A=0.0026 m. This ensures the appropriate amplitude, suitable for the assumed lift coefficient and the assumed transport speed. With these parameters, the feed 8 starts to be fed onto the conveyor and the transport is carried out with a predetermined performance. In order to change the performance of the conveyor, during its operation, the excitation frequency ($\omega$) is adjusted by means of inverters 7 increasing or decreasing it so that the operating point (W) reaches another, required vibration amplitude (A) of the trough 1 and is still on the rising slope of the second resonance. In this way, the performance of the conveyor can be smoothly adjusted. On the other hand, in order to stop the transport, with the vibration drive switched on, the excitation frequency ($\omega$) is decreased by means of inverters 7 so that the operating point (W) is in the anti-resonance valley (V) preceding the second resonance, which corresponds to the excitation frequency ($\omega$) being equal or close to the eigenfrequency $\omega_{el}$ of the mass of the eliminator 2 on its suspension, in the direction of the resultant excitation force. The mass of the eliminator 2 at this excitation frequency acts as a dynamic eliminator of the mass of the trough 1, in a similar way to the Frahm eliminator. Additionally, to ensure the desired movement, the mass of the eliminator 2, is guided by a set of spring bars 6 having a high longitudinal stiffness. This ensures oscillation of the mass of the eliminator 2 along the excitation straight line.

If the mass of the eliminator 2 is $m_{el}$ and the total stiffness of its suspension in the direction of action of the excitation force is $k_{el}$, the eigenfrequency $\omega_{el}$, the so-called partial frequency in this direction is defined by the following formula:

$$\omega_{el} = \sqrt{\frac{k_{el}}{m_{el}}}$$

At the excitation frequency ($\omega$) equal to or close to the eigenfrequency ($\omega_{el}$), the vibrations of the mass of the eliminator 2 are established in such a way that the force in the resilient elements balances - in the absence of damping in the system - the exciting force $P_0$ sin $\omega$ t, extinguishing the vibrations of the mass of the trough 1. This phenomenon occurs regardless of the frequency of natural vibrations of the basic system before attaching the eliminator 2.

In this case, the Frahm eliminator system operates in an anti-resonance valley surrounded on two sides with resonance regions; the width of the valley depends on the ratio of the mass of the eliminator 2 to the mass of the trough 1. Stopping the vibrations of the trough 1, and thus the transport of the feed, can be achieved in a short time, and the vibrations of the trough 1 may be suppressed almost completely. It should be noted that the transport of the feed 8 is stopped even with small vibrations of the trough 1 before their complete extinction, as soon as the lift coefficient is less than one.

This conveyor is very well suited for a precise dosing of the feed, especially in the mode of frequent stopping of transport. The advantage of this solution is also the fact that the feed 8 on the trough 1 is evenly distributed along its length when the transport is stopped. The transport is resumed when the excitation frequency ($\omega$) of unbalanced masses of electro-vibrators 3 increases to a frequency close to the system resonance associated with the second resonance zone. Then the vibrations of the mass of the eliminator 2 will not significantly affect the vibrations of the mass of the trough 1 and the transport will take place at a speed typical of a given class of machines.

By manipulating the motor operating frequency within the range of 20-25Hz, the full performance range (0-100%) can be achieved. The device therefore enables quick and smooth changes of performance, including stopping, and enables an efficient resumption of the transport, as there is no need to stop and start the motors.

**Claims**

1.  A vibrating conveyor, comprising a trough (1) having a working surface and open at least at one end, resiliently supported in a substantially horizontal position, and a vibration drive in the form of a pair of self-synchronizing counter-rotating electro-vibrators (3) with the possibility of a smooth adjustment of rotation and suspended under the conveyor trough (1) at an angle such that their resultant force passes through the centre of gravity (9) of the trough (1) lying on a vertical plane passing through the longitudinal axis of the trough, and the axes of rotation of the electro-vibrators (3) are perpendicular to this plane, and further comprising a mass of an eliminator (2) attached to the trough (1) by means of a resilient suspension in such a way that the mass of the eliminator (2) has degrees of freedom limited to one translational degree, in the direction coincident with the direction of the line of action of the resultant force of the electro-vibrators (3) wherein the latter are equipped with rotational speed regulators for said smooth adjustment of rotation, which are inverters (7), **characterised in that** the centre of gravity (9) of the mass of the eliminator (2) lies on the direction of the line of action of the resultant force of the electro-vibrators (3), and the resilient suspension of the mass of the eliminator (2) is provided by an additional coil spring (5) with the axis thereof coinciding with the direction of the line of action of the resultant force of the electro-vibrators (3) and at least one pair of spring bars (6) with a longitudinal axis perpendicular to the direction of the line of action of the resultant force of the electro-vibrators (3).

2. The vibrating conveyor according to claim 1, **characterized in that** the resilient support of the trough (1) is provided by four identical coil springs (4) arranged in the corners of the trough (1) at equal distances from the centre of gravity (9) of the trough (1).

3. The vibrating conveyor according to claim 1, **characterized in that** the direction of the line of action of the resultant force of the electro-vibrators (3) is inclined relative to the working surface of the trough (1) at an angle $(\beta) = 30^0$.

4. The vibrating conveyor according to claim 1, **characterized in that** it comprises two pairs of spring bars (6), each of them arranged on one of both sides of the mass of the eliminator (2).

5. A method for controlling the operation of the vibrating conveyor according to claim 1, whereby

   - in order to stop the transport state, with the vibration drive switched on, the excitation frequency $(\omega)$ is reduced by means of the inverters (7) to a value equal to or close to the eigenfrequency $(\omega_{e1})$ of the mass of the eliminator (2) on its suspension, called the partial frequency, so that the operating point (W) is situated in the anti-resonance valley (V) preceding the second resonance,

   **characterized in that**

   - in order to set the mode of operation of the conveyor in the transport state with a predetermined performance, the inverters (7) are used to set the excitation frequency $(\omega)$ of the electric motors of the electro-vibrators (3) at the operating point (W) situated on the rising slope of the second resonance of the conveyor characteristics $A(\omega)$ describing the dependence of the vibration amplitude (A) of the trough (1) on the excitation frequency $(\omega)$, and
   - in order to change the performance of the conveyor, during its operation, the excitation frequency $(\omega)$ is adjusted by means of the inverters (7) so that the operating point (W) reaches the required vibration amplitude (A) of the trough (1) and is still on the rising slope of the second resonance of the characteristic $A(\omega)$

## Patentansprüche

1. Ein Schwingförderer, umfassend

   einen Trog (1)

      mit einer Arbeitsfläche, und
      welcher an mindestens einem Ende offen ist und
      eine federnde Lagerung in einer im Wesentlichen horizontalen Position aufweist, und
      ein Vibrationsantrieb in Form eines Paares selbstsynchronisierender, gegenläufig rotierender Elektrovibratoren (3) mit der Möglichkeit einer stufenlosen Rotationseinstellung,
      wobei der Vibrationsantrieb unter dem Trog (1) des Förderers in einem Winkel aufgehängt ist, sodass eine resultierende Kraft durch den auf einer vertikalen, durch die Längsachse des Troges verlaufenden Ebene liegenden Schwerpunkt (9) des Troges (1) verläuft, und die Drehachsen der Elektrovibratoren (3) senkrecht zu dieser Ebene liegen,

   und ferner umfassend eine Masse eines Eliminators (2),
   welche mittels einer federnden Aufhängung an dem Trog (1) befestigt ist, sodass die Masse des Eliminators (2) Freiheitsgrade aufweist, begrenzt auf einen Translationsgrad in der Richtung, welche mit der Richtung der Wirkungslinie der resultierenden Kraft der Elektrovibratoren (3) übereinstimmt, wobei die letztgenannte mit Drehzahlreglern zur stufenlose Rotationseinstellung ausgestattet sind, bei welchen es sich um Wechselrichter (7) handelt, **dadurch gekennzeichnet, dass** der Schwerpunkt (9) der Masse des Eliminators (2) in der Richtung der Wirkungslinie der resultierenden Kraft der Elektrovibratoren (3) liegt, und die federnde Aufhängung der Masse des Eliminators (2) durch

      eine zusätzliche Schraubenfeder (5), welcher Achse mit der Richtung der Wirkungslinie der resultierenden Kraft der Elektrovibratoren (3) übereinstimmt,
und mindestens ein Paar von Federstäben (6) mit einer Längsachse senkrecht zur Richtung der Wirkungslinie der resultierenden Kraft der Elektrovibratoren (3)

vorgesehen wird.

2. Schwingförderer nach Anspruch 1, **dadurch gekennzeichnet, dass** die federnde Lagerung des Troges (1) durch vier gleiche Schraubenfedern (4) vorgesehen wird, welche in gleichen Abständen vom Schwerpunkt (9) des Troges (1) in den Ecken des Troges (1) angeordnet sind.

3. Schwingförderer nach Anspruch 1, **dadurch gekennzeichnet, dass** die Richtung der Wirkungslinie der resultierenden Kraft der Elektrovibratoren (3) gegenüber der Arbeitsfläche des Troges (1) um einen Winkel ($\beta$) = 30° geneigt ist.

4. Schwingförderer nach Anspruch 1, **dadurch gekennzeichnet, dass** er zwei Paare von Federstäben (6) umfasst, wobei jedes davon auf einer der beiden Seiten der Masse des Eliminators (2) angeordnet ist.

5. Verfahren zur Steuerung des Betriebs des Schwingförderers nach Anspruch 1, wobei:

> - um den Transportzustand anzuhalten, wird beim eingeschalteten Vibrationsantrieb die Erregerfrequenz ($\omega$) mittels der Wechselrichter (7) auf einen Wert reduziert, welcher gleich oder nahe der Eigenfrequenz ($\omega_{e1}$), der sogenannten Teilfrequenz, der Masse des Eliminators (2) an seiner Aufhängung ist, sodass der Arbeitspunkt (W) vor der zweiten Resonanz im Antiresonanztal (V) liegt,

> **dadurch gekennzeichnet, dass**

> - um die Betriebsart des Förderers im Transportzustand mit einer vorgegebenen Leistung einzustellen, werden die Wechselrichter (7) zum Einstellen der Erregerfrequenz ($\omega$) der Elektromotoren der Elektrovibratoren (3) an dem auf der ansteigenden Neigung der zweiten Resonanz der Förderers-Charakteristik A($\omega$), welche die Abhängigkeit der Schwingungsamplitude (A) des Troges (1) von der Erregerfrequenz ($\omega$) beschreibt, liegenden Arbeitspunkt (W) verwendet, und
> - um die Leistung des Förderers während seines Betriebs zu verändern, wird die Erregerfrequenz ($\omega$) mittels der Wechselrichter (7) so angepasst, dass der Arbeitspunkt (W) die erforderliche Schwingungsamplitude (A) des Troges (1) erreicht und sich immer noch auf der ansteigenden Neigung der zweiten Resonanz der Charakteristik A($\omega$) befindet.

## Revendications

1. Transporteur vibrant, comprenant une auge (1) ayant une surface utile et ouverte au moins à une extrémité, supportée élastiquement dans une position essentiellement horizontale, et un entraînement vibrant sous la forme d'une paire des vibrateurs électriques (3) autosynchronisés tournants en sens inverse, avec une régulation de vitesse de rotation continue possible et suspendus sous l'auge (1) du transporteur sous un angle tel que leur force résultante passe par le centre de gravité (9) de l'auge (1), qui se trouve sur une plan verticale passant par l'axe longitudinal de l'auge, et les axes de rotation des vibrateurs électriques (3) sont perpendiculaires à ce plan, et comprenant en outre une masse d'un éliminateur (2) attaché à l'auge (1) avec l'aide d'une suspension élastique de telle sorte que la masse de l'éliminateur (2) présente des degrés de liberté limités à un degré de translation, dans la direction compatible avec la direction d'action de la force résultante des vibrateurs électriques (3), les vibrateurs étant équipés de régulateurs de vitesse de rotation avec régulation de vitesse continue possible, qui sont des onduleurs (7), **caractérisé en ce que** le centre de gravité (9) de la masse de l'éliminateur (2) se trouve dans la direction de la ligne d'action de la force résultante des vibrateurs électriques (3), et la suspension élastique de la masse de l'éliminateur (2) est assurée par un ressort en hélice auxiliaire (5) dont l'axe coïncide avec la direction de la ligne d'action de la force résultante des vibrateurs électriques (3) et au moins une paire de barres élastiques (6) avec un axe longitudinal perpendiculaire à la direction de la ligne d'action de la force résultante des vibrateurs électriques (3).

2. Transporteur vibrant selon la revendication 1, **caractérisé en ce que** le support élastique de l'auge (1) est assuré par quatre ressorts en hélice identiques (4) disposés dans les coins de l'auge (1) à égale distance du centre de gravité (9) de l'auge (1).

3. Transporteur vibrant selon la revendication 1, **caractérisé en ce que** la direction de la ligne d'action de la force résultante des vibrateurs électriques (3) est inclinée par rapport à la surface de travail de l'auge (1) d'un angle ($\beta$) = 30°.

4. Transporteur vibrant selon la revendication 1, **caractérisé en ce qu'**il comprend deux paires de barres élastiques (6), chacune placée sur l'un des deux côtés de la masse de l'éliminateur (2).

5. Procédé de commande du fonctionnement du transporteur vibrant selon la revendication 1, dans lequel :

    - afin d'arrêter l'état de transport, l'entraînement vibrant étant enclenché, on réduit la fréquence d'excitation ($\omega$) au moyen des onduleurs (7) à une valeur égale ou proche de la fréquence propre ($\omega_{e1}$) de la masse de l'éliminateur (2) sur sa suspension, dit fréquence partielle, de sorte que le point de fonctionnement (W) se situe dans la vallée d'antirésonance (V) précédant la deuxième résonance,

**caractérisé en ce que**

    - afin de régler le mode de fonctionnement du transporteur en état de transport avec une performance prédéterminée, on utilise les onduleurs (7) pour régler la fréquence d'excitation ($\omega$) des moteurs électriques des vibrateurs électriques (3) à la point de fonctionnement (W) situé sur la pente montante de la deuxième résonance des caractéristiques du transporteur A($\omega$) décrivant la dépendance de l'amplitude de vibration (A) de l'auge (1) sur la fréquence d'excitation ($\omega$), et

    - afin de modifier les performances du transporteur, pendant son fonctionnement, on ajuste la fréquence d'excitation ($\omega$) au moyen des onduleurs (7) de manière à ce que le point de fonctionnement (W) atteigne l'amplitude de vibration (A) requise de l'auge (1) et est toujours sur la pente montante de la deuxième résonance de la caractéristique A($\omega$).

Fig. 1

Fig. 2

**REFERENCES CITED IN THE DESCRIPTION**

**Patent documents cited in the description**

- US 3064357 A
- US 3053379 A
- US 4771894 A
- PL 425086 B1
- JP 6206962 B
- PL 425950